# NEUE EUROPÄISCHE PATENTSCHRIFT

(11) **EP 0 403 584 B2**
(45) Veröffentlichungstag und Bekanntmachung des Hinweises auf die Entscheidung über den Einspruch: **01.08.2001**
(45) Hinweis auf die Patenterteilung: 15.12.1993
(21) Anmeldenummer: 89907109.6
(22) Anmeldetag: 19.05.1989
(51) Int. Cl.: H04M 1/725

(54) **VERFAHREN ZUM VERBINDUNGSAUFBAU ZWISCHEN EINEM FEST- UND MEHREREN MOBILTEILEN EINES SCHNURLOSTELEFONSYSTEMS**
PROCESS FOR ESTABLISHING A CONNECTION BETWEEN A FIXED AND SEVERAL MOBILE ELEMENTS IN A CORDLESS TELEPHONE SYSTEM
PROCEDE POUR ETABLIR UNE COMMUNICATION ENTRE UNE PARTIE FIXE ET PLUSIEURS PARTIES MOBILES D'UN SYSTEME TELEPHONIQUE SANS FIL

(30) Priorität: 20.05.1988 AT 133888
(43) Veröffentlichungstag der Anmeldung: 27.12.1990
(73) Patentinhaber: Siemens Aktiengesellschaft Österreich, 1210 Wien (AT); SIEMENS AKTIENGESELLSCHAFT, 80333 München (DE)
(72) Erfinder: FORER, Josef, A-1060 Wien (AT); TREITL, Karl, A-2103 Langenzersdorf (AT); BABOL, Boguslaw, A-1210 Wien (AT)
(74) Vertreter: Zedlitz, Peter, Dipl.-Inf.
(86) Internationale Anmeldenummer: EP8900555
(87) Internationale Veröffentlichungsnummer: WO8911765

(56) Entgegenhaltungen:
- EP-A- 0 146 814
- EP-A- 0 180 178
- EP-A- 0 248 351
- EP-A- 0 260 991
- DE-A- 3 142 019
- DE-A- 3 520 441
- US-A- 4 682 367

## Beschreibung

Die Erfindung betrifft ein Verfahren zum Verbindungsaufbau zwischen einem Fest- und mehreren Mobilteilen eines Schnurlostelefonsystems über einen Funkkanal eines Frequenzbandes mit ankommendem Ruf vom Fest- zum Mobilteil und abgehendem Ruf vom Mobil- zum Festteil, wobei zwischen Fest- und Mobilteil ein Kennungscode mit Gruppenkennung als Gruppenmeldung ausgetauscht und zum Verbindungsaufbau zwischen Fest- und Mobilteil bei ankommendem Ruf vom Festteil an zu einer Gruppe verbundene Mobilteile die Gruppenmeldung gesendet wird.

In der EP 180 178 wird ein Schnurlos-Telefonsystem beschrieben, bei dem einem Festteil mehrere Mobilteile zugeordnet sind. Die Mobilteile unterscheiden sich durch ihre gerätespezifische Kennung. Einem Haupt-Mobilteil sind mehrere Neben-Mobilteile untergeordnet. Es ist nur vom Haupt-Mobilteil aus möglich, abgehende Gespräche zu führen und ankommende entgegenzunehmen. Von den Neben-Mobilteilen können nur ankommende Gespräche entgegengenommen werden. Der beschriebene Verbindungsaufbau zwischen Fest- und Mobilteil erfolgt mit Hilfe eines Meldungskanals. Darüberhinaus handelt es sich bei den Mobilteilen um keine echten Nebenstellen. Daher erfolgt auch keine Durchwahl an einen bestimmten Mobilteil.

Im Telcom-Report 10 (1987), Seite 130- 137 wird der Aufbau eines Schnurlostelefones beschrieben. Dieser Apparat ist mit einem einzigen Mobilteil ausgestattet. Wenn ein Bedarf für mehrere Mobilteile besteht, so können mehrere Schnurlostelefone beschafft und voneinander unabhängig betrieben werden.

Bei einem Funkkonzentrator werden mehrere Mobilteile mit einem Festteil über Funk verbunden. Dazu wird ein Meldungskanal benötigt, über den die Koordination der Mobilteile mit dem Festteil erfolgt. Ein derartiger Kanal vermindert die Zahl der verfügbaren Sprachkanäle und ist beispielsweise im 900-MHz-Band nicht vorgesehen. Die Verwendung eines normalen Funkkanals ausschließlich für Meldungszwecke zusätzlich zum verwendeten Sprachkanal würde die mögliche Teilnehmerdichte durch unrationelle Kanalnutzung beträchtlich herabsetzen.

Der Erfindung liegt die Aufgabe zugrunde, mehrere Mobilteile einem Festteil zuzuordnen und dabei die Verbindung ausschließlich über einen Sprachkanal aufzubauen.

Die Aufgabe der Erfindung wird durch ein Verfahren zum Verbindungsaufbau zwischen einem Fest- und mehreren Mobilteilen eines Schnurlostelefonsystems über einen Funkkanal eines Frequenzbandes mit ankommendem Ruf vom Fest- zum Mobilteil und abgehendem Ruf vom Mobil- zum Festteil gelöst, wobei zwischen Fest- und Mobilteil ein Kennungscode mit Gruppen- und Individualkennung als Kennungsmeldung ausgetauscht, zum Verbindungsaufbau zwischen Fest- und Mobilteil bei ankommendem Ruf vom Festteil über einen Funkkanal die individuelle Kennungsmeldung jedes Mobilteiles nacheinander an die zu einer Gruppe verbundene Mobilteile gesendet, jeweils von allen Mobilteilen ein freier Duplex-Funkkanal der Sprachkanäle eingestellt und von jedem Mobilteil der Anruf signalisiert wird, dadurch gekennzeichnet, daß der Sprachkanal mit dem Beginn des Verbindungsaufbaues durch den Festteil eingestellt wird, daß die Kennungsmeldung mit einer Rufmeldung über den eingestellten Sprachkanal an die Mobilteile gesendet wird, daß vom jeweils individuell gerufenen Mobilteil eine Rufanzeigemeldung an den Festteil auf dem Sprachkanal zurückgesendet und dieser Vorgang solange fortgesetzt wird, bis von einem der gerufenen Mobilteile durch Betätigung seines Gabelschalters eine Verbindung über den Sprachkanal aufgebaut wird und daß vom Festteil eine Besetztmeldung ausgesendet wird, aufgrund derer von den übrigen, passiven Mobilteilen der Audioweg abgeschaltet und der Kennungsaustausch weiter überwacht wird.

Der Verbindungsaufbau zwischen Fest- und Mobilteil bei ankommendem Ruf wird in einen Verbindungsaufbau wie bei abgehendem Ruf umgewandelt. Der Verbindungsaufbau wird durch die Betätigung des Gabelschalters am Mobilteil in Gang gesetzt und kann in üblicher Weise nach dem Senden einer Verbindungsaufbaumeldung ablaufen. Die Belegung eines Duplex-Funkkanals erfolgt erst mit dem tatsächlichen Verbindungsaufbau. Die Verbindung des Festteils mit dem jeweiligen Mobilteil wird vorher durch den Meldungsaustausch koordiniert. Das verfahren ist in bestehende Normen integrierbar. Nach diesem Verfahren wird immer nur jeweils ein einziger Duplex-Funkkanal zum Meldungsaustausch und Verbindungsaufbau zwischen dem Festteil und einem der Mobilteile benutzt. Das Frequenzband wird dadurch besonders rationell verwaltet. Die Übertragung der Kennungsmeldung und Rufanzeigemeldung bis zur Übertragung der Verbindungsaufbaumeldung erfolgt reihum zwischen dem jeweils individuell gerufenen Mobilteil und dem Festteil. Nach dem Verbindungsaufbau wird von den passiven Mobilteilen der Kennungsaustausch zwischen dem aktiven Mobilteil und dem Festteil überwacht, um bei Betätigung ihres Gabelschalters einen internen Besetztton abzugeben und das Lösen der Verbindung zu erkennen.

Eine Gesprächskollision wird dadurch verhindert und eine Gesprächsweitergabe an einen anderen Mobilteil dadurch möglich, daß von den passiven Mobilteilen während der aufrechten Verbindung bei Betätigung ihres Gabelschalters ein internes Besetztzeichen abgegeben, bzw. bei Änderung des Kennungscodes der Individualkennung in der Kennungsmeldung das Gespräch von dem entsprechenden Mobilteil durch Betätigung des Gabelschalters übernommen wird. Diese Funktion läßt sich mit geringem technischen Aufwand realisieren, da der Kennungsaustausch von den passiven Mobilteilen in jedem Fall zu überwachen ist.

Eine Direktwahl mit Kennziffer ähnlich einer Nebenstellenanlage ist dadurch möglich, daß bei ankommendem Ruf, durch den ein Mobilteil direkt angewählt wird, vom Festteil über den freien Duplex-Funkkanal nur die Kennungsmeldung mit Gruppen- und Individualkennung dieses Mobilteiles gesendet wird. Die übrigen Mobilteile überwachen lediglich den Meldungsaustausch, und dieser Duplex-Funkkanal wird von ihnen am Sende/Empfangsteil eingestellt.

Die Vorschläge der CEPT (Gn 1231G*/' 82-627) werden mit der Ausnahme erfüllt, daß bei abgehendem Ruf vom Festteil mit dem rufenden Mobilteil eine Verbindung aufgebaut und auf diesem Duplex-Funkkanal eine Besetztmeldung für die passiven Mobilteile gesendet wird. Dadurch haben diese Mobilteile auch bei abgehendem Ruf die Möglichkeit, den Sende/Empfangsteil auf die Frequenz dieses Duplex-Funkkanals einzustellen.

Die Erfindung wird anhand zweier Ausführungsbeispiele mit Zeichnungen näher erläutert. Es zeigen:
- Fig. 1: den Meldungsaustausch beim ersten Ausführungsbeispiel,
- Fig. 2: die erste Phase des Meldungsaustausches beim zweiten Ausführungsbeispiel und
- Fig. 3: die zweite Phase des Meldungsaustausches beim zweiten Ausführungsbeispiel.

In beiden Beispielen sind einem Festteil eines Schurlostelefones mehrere Mobilteile zugeordnet. Die schaltungsmäßige Ausstattung ist weitgehend identisch. Die beiden Beispiele unterscheiden sich dadurch, wie die vermittlungstechnischen Daten übertragen und überwacht werden. Das gemeinsame, grundlegende Merkmal ist die Umwandlung von ankommenden Rufen in abgehende. Dadurch wird die Verbindung zwischen Fest- und Mobilteil immer in gleicher Weise, als abgehender Ruf, aufgebaut.

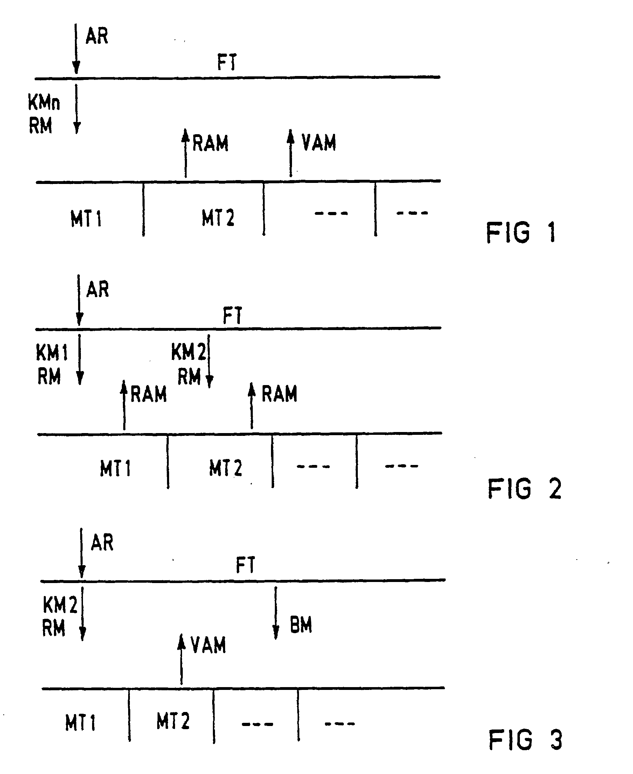

Um die Kommunikation zwischen den richtigen Systemkomponenten im ersten Beispiel sicherzustellen, wird zwischen dem Festteil und den Mobilteilen ein Kennungscode mit Gruppen- und Individualkennung ausgetauscht. Fig. 1 zeigt, daß ein ankommender Ruf AR am Festteil FT eintrifft. Dieser sendet auf einem freien Duplex-Funkkanal eine Kennungsmeldung KMn und eine Rufmeldung RM. Von den Mobilteilen MTn werden die Meldungen KMn, RM empfangen und decodiert. Sofern ein Mobilteil MTn dieser Gruppe zugeordnet ist, wird der Anruf am Mobilteil MTn durch eine Leuchtdiode oder Flüssigkristallanzeige und einen Tongenerator unabhängig von der Individualkennung signalisiert. Eine Störung von oder durch fremde Mobilteile MTn wird durch die Gruppenkennung ausgeschlossen. Die Individualkennung wird nur bei einer Gesprächsweitergabe zwischen zwei Mobilteilen MTn ausgewertet. Nach dem Aussenden der Kennungs- und Rufmeldung KMn,RM werden vom Festteil FT alle Duplex-Funkkanäle auf Rückmeldungen überwacht.

Jeder Mobilteil MTn, von dem der Anruf signalisiert wird, sendet auf jeweils einem Duplex-Funkkanal eine Rufanzeigemeldung RAM an den Festteil FT. Dieser speichert die Kanalnummern ab und überwacht nurmehr diese Duplex-Funkkanäle, nachdem von allen Mobilteilen MTn der Gruppe die Rufanzeigemeldung RAM gesendet worden ist. Dadurch wird die Funkstreckenaufbauzeit optimiert. Mit der Betätigung einer Gabelschaltung durch eine angerufene Person wird eine Verbindungsaufbaumeldung VAM vom Mobilteil MTn auf dem vorher ausgewählten Duplex-Funkkanal ausgesendet. Der Aufbau der Verbindung und der weitere Ablauf während und nach dem Gespräch erfolgt in bekannter Weise.

In Fig. 2 ist der Beginn des Austausches der vermittlungstechnischen Daten nach dem zweiten Ausführungsbeispiel dargestellt. Der gesamte Meldungsaustausch und die Verbindung zwischen den Mobilteilen MTn und dem Festteil FT wird vom Eintreffen des ankommenden Rufes AR an über einen einzigen Duplex-Funkkanal durchgeführt. Die Mobilteile MTn werden gezielt mit Gruppen- und Individualkennung adressiert.

Sobald der ankommende Ruf AR vorliegt, sendet der Festteil FT auf einem freien Duplex-Funkkanal eine erste Kennungsmeldung KM1 mit der Individualkennung des ersten Mobilteiles MT1 und die Rufmeldung RM. Vom ersten Mobilteil MT1 wird die Gruppen- und Individualkennung identifiziert und der Anruf signalisiert. Durch die identische Individualkennung wird das Aussenden der Rufanzeigemeldung RAM ausgelöst. Die anderen Mobilteile MTn identifizieren lediglich die Gleichheit der Gruppenkennung. Der Anruf wird von den Mobilteilen MTn trotzdem signalisiert, und ihr Sende/Empfangsteil wird zur Belegung des Duplex-Funkkanals auf dessen Frequenz eingestellt. Anschließend wird vom Festteil FT die zweite Kennungsmeldung KM2 des zweiten Mobilteiles MT2 mit der Rufmeldung RM gesendet, und der Vorgang wiederholt sich für jeden Mobilteil MTn. Nachdem vom Festteil FT alle Individualkennungen gesendet worden sind, werden von ihm zur Vermeidung von Kollisionen mit abgehendeh Rufen alle Duplex-Funkkanäle auf die Meldung einer Betätigung eines Gabelschalters abgesucht. Nach der Zeitdauer, die ein Mobilteil MTn zur Suche nach einem freien Duplex-Funkkanal für einen abgehenden Ruf benötigen würde, beginnt der Festteil FT auf dem zuerst gewählten Duplex-Funkkanal erneut einen Mobilteil MTn nach dem anderen zu rufen.

Fig. 3 zeigt den Aufbau der Verbindung zwischen Fest- und Mobilteil FT, MTn. Sobald der Gabelschalter beispielsweise am zweiten Mobilteil MT2 betätigt wird, wird auf die zweite Kennungsmeldung KM2 statt der Rufanzeigemeldung RAM die Verbindungsaufbaumeldung VAM zurückgesendet. Anschließend wird vom Festteil FT eine Besetztmeldung BM ausgesendet, durch die allen übrigen Mobilteilen MTn der Verbindungsaufbau gemeldet wird. Von diesen wird daraufhin das Signalisieren des Anrufes eingestellt und der Audioweg abgeschaltet, um ein Mithören des Gespräches zu verhindern. Der periodische Kennungsaustausch zwischen dem aktiven zweiten Mobilteil MT2 und dem Festteil FT wird jedoch von den passiven Mobilteilen MTn überwacht. Damit kann auf eine Gesprächsübergabe durch Änderung der Individualkennung und auf das Lösen der Verbindung sofort reagiert werden. Beim Betätigen des Gabelschalters eines passiven Mobilteiles MTn erzeugt dieser während einer aufrechten Verbindung ein internes Besetztzeichen.

Wird auf dem ursprünglichen Duplex-Funkkanal nach mehreren Durchgängen keine Verbindungsaufbaumeldung empfangen, so beginnt der Festteil den Sendevorgang der Kennungsmeldung auf einem anderen freien Duplex-Funkkanal von neuem. Dadurch kann auch mit jenen Mobilteilen ein ankommender Ruf entgegengenommen werden, die sich an einem Ort befinden, an dem der Empfang einzelner Kanäle beispielsweise durch Überlagerung gestört ist oder sich die Sendebereiche zweier Festteile überlappen. In solchen Fällen kann es vorkommen, daß ein von einem Festteil als frei identifizierter Duplex-Funkkanal vom anderen Festteil belegt ist und daher dem, dem ersten Festteil zugeordneten, Mobilteil nicht zur Verfügung steht.

Der Verbindungsaufbau in abgehender Richtung erfolgt nach den Vorschlägen der CEPT (Gn 1231 G*/'82-627). Darüberhinaus sendet der Festteil eine Besetztmeldung aus, sobald die Verbindung mit dem rufenden Mobilteil aufgebaut ist. Das geschieht über den Duplex-Funkkanal, über den die Funkverbindung mit dem Mobilteil aufgebaut ist. Die passiven Mobilteile stellen daraufhin ihren Sende/Empfangsteil auf diesen Duplex-Funkkanal ein, überwachen den Meldungsaustausch und schalten den Audioweg ab.

## Patentansprüche

1. Verfahren zum Verbindungsaufbau zwischen einem Fest- und mehreren Mobilteilen (FT,MTn) eines Schnurlostelefonsystems über einen Funkkanal eines Frequenzbandes mit ankommendem Ruf (AR) vom Fest- zum Mobilteil (FT,MTn) und abgehendem Ruf vom Mobil- zum Festteil (MTn,FT), wobei zwischen Fest- und Mobilteil (FT,MTn) ein Kennungscode mit Gruppen- und Individualkennung als Kennungsmeldung (KMn) ausgetauscht, zum Verbindungsaufbau zwischen Fest- und Mobilteil (FT,MTn) bei ankommendem Ruf (AR) vom Festteil (FT) über einen Funkkanal die individuelle Kennungsmeldung (KMn) jedes Mobilteiles (MTn) nacheinander an die zu einer Gruppe verbundene Mobilteile (MTn) gesendet, jeweils von allen Mobilteilen (MTn) ein freier Duplex-Funkkanal der Sprachkanäle eingestellt und von jedem Mobilteil (MTn) der Anruf signalisiert wird, **dadurch gekennzeichnet**, daß der Sprachkanal mit dem Beginn des Verbindungsaufbaues durch den Festteil (FT) eingestellt wird, daß die Kennungsmeldung (KMn) mit einer Rufmeldung (RM) über den eingestellten Sprachkanal an die Mobilteile (MTn) gesendet wird, daß vom jeweils individuell gerufenen Mobilteil (MTn) eine Rufanzeigemeldung (RAM) an den Festteil (FT) auf dem Sprachkanal zurückgesendet und dieser Vorgang solange fortgesetzt wird, bis von einem der gerufenen Mobilteile (MTn) durch Betätigung seines Gabelschalters eine Verbindung über den Sprachkanal aufgebaut wird und daß vom Festteil (FT) eine Besetztmeldung (BM) ausgesendet wird, aufgrund derer von den übrigen, passiven Mobilteilen (MTn) der Audioweg abgeschaltet und der Kennungsaustausch weiter überwacht wird.

2. Verfahren nach Anspruch 1, **dadurch gekennzeichnet,** daß von den passiven Mobilteilen während der aufrechten Verbindung bei Betätigung ihres Gabelschalters ein internes Besetztzeichen abgegeben, bzw. bei Änderung des Kennungscodes der Individualkennung in der Kennungsmeldung das Gespräch von dem entsprechenden Mobilteil durch Betätigung des Gabelschalters übernommen wird.

3. Verfahren nach Anspruch 1 oder 2, **dadurch gekennzeichnet,** daß bei ankommendem Ruf (AR), durch den ein Mobilteil (MTn) direkt angewählt wird, vom Festteil (FT) über den freien Duplex-Funkkanal nur die Kennungsmeldung (KMn) mit Gruppen- und Individualkennung dieses Mobilteiles (MTn) gesendet wird.

4. Verfahren nach einem der Ansprüche 1 bis 3, **dadurch gekennzeichnet**, daß bei abgehendem Ruf vom Festteil (FT) mit dem rufenden Mobilteil (MTn) eine Verbindung aufgebaut und auf diesem Duplex-Funkkanal eine Besetztmeldung (BM) für die passiven Mobilteile (MTn) gesendet wird.

## Claims

1. Process for establishing a connection between one fixed and several mobile elements (FT,MTn) of a cordless telephone system via a radio channel of a frequency band with incoming calling (AR) from the fixed to the mobile element (FT,MTn) and outgoing calling from the mobile to the fixed element (MTn,FT), in which an identification code with group and individual identifier is exchanged between fixed and mobile element (FT,MTn) as identification signal (KMn), for establishing a connection between fixed and mobile element (FT,MTn) the individual identification signal (KMn) of each mobile element (MTn) is successively transmitted via a radio channel in the case of an incoming call (AR) from the fixed element (FT) to the mobile elements (MTn) connected to form a group, a free duplex radio channel of the voice channels is set in each case by all mobile elements (MTn) and the call is signalled by each mobile element (MTn), characterized in that the voice channel is set at the beginning of the connection establishment by the fixed element (FT), in that the identification signal (KMn) is transmitted with a call signal (RM) to the mobile elements (MTn) via the voice channel set, in that a call indication signal (RAM) is transmitted back from the respective individually called mobile element (MTn) to the fixed element (FT) on the voice channel and this procedure is repeated until a connection is established via the voice channel by one of the called mobile elements (MTn) by actuation of its cradle switch, and in that a busy message (BM) is transmitted by the fixed element (FT), as a result of which the audio path is switched off by the other, passive mobile elements (MTn) and the identifier exchange continues to be monitored.

2. Process according to Claim 1, characterized in that an internal busy signal is output by the passive mobile elements while the connection is maintained by actuation of its cradle switch, or the call is accepted by the corresponding mobile element by actuation of the cradle switch if the identification code of the individual identifier is changed in the identification signal.

3. Process according to Claim 1 or 2, characterized in that for an incoming call (AR) with which a mobile element (MTn) is dialled directly, only the identification signal (KMn) with group and individual identifier of said mobile element (MTn) is transmitted by the fixed. element (FT) via the free duplex radio channel.

4. Process according to one of Claims 1 to 3, characterized in that for an outgoing call a connection is established to the calling mobile element (MTn) by the fixed element (FT) and a busy message (BM) for the passive mobile elements (MTn) is transmitted on said duplex radio channel.

## Revendications

1. Procédé d'établissement de communication entre une partie (FT) fixe et plusieurs parties (MTn) mobiles d'un système de téléphone sans fil par l'intermédiaire d'une voie radioélectrique d'une bande de fréquence par appel (AR) arrivant de la partie (FT) fixe à la partie (MTn) mobile et par appel partant de la partie (MTn) mobile à la partie (FT) fixe, un code d'identification comportant une identification de groupe et une identification individuelle comme message (KMn) d'identification étant échangé, pour établir la communication entre la partie fixe (FT) et la partie (MTn) mobile lors d'un appel (AR) arrivant de la partie (FT) fixe par l'intermédiaire d'une voie radioélectrique, le message (KMn) d'identification individuelle de chaque partie (MTn) mobile étant envoyé successivement aux parties (MTn) mobiles reliées en un groupe, une voie radioélectrique libre de duplex des voies de trafic étant établies respectivement par toutes les parties (MTn) mobiles et l'appel étant signalé par chaque partie (MTn) mobile, caractérisé en ce que la voie de trafic est établie au début de l'établissement de la communication par la partie (FT) fixe, en ce que le message (KMn) d'identification comportant une signalisation (RM) d'appel est émis par l'intermédiaire de la voie de trafic établie à destination des parties (MTn) mobiles, en ce qu'il est renvoyé par chaque partie (MTn) mobile appelée individuellement un message (RAM) d'indication d'appel à la partie (FT) fixe sur la voie de trafic et en ce que cette opération est prolongée jusqu'à ce qu'une liaison par l'intermédiaire de la voie de trafic soit établie par l'une des parties (MTn) mobiles appelées par actionnement de son termineur et qu'il soit émis par la partie (FT) fixe un message (BM) d'occupation sur la base duquel la voie audio est déconnectée par les autres parties (MTn) mobiles restantes passives et l'échange d'identification continue d'être surveillé.

2. Procédé suivant la revendication 1, caractérisé en ce qu'il est fourni par les parties mobiles passives, pendant la communication maintenue, lors de l'actionnement de leur termineur, un signe d'occupation interne, et, en ce que, en cas de changement du code d'identification de l'identification individuelle dans le message d'identification, la conversation est prise en charge par la partie mobile correspondante par actionnement du termineur.

3. Procédé suivant la revendication 1 ou 2, caractérisé en ce que, en cas d'appel (AR) arrivant par lequel une partie (MTn) mobile est sélectionnée directement, il n'est envoyé par la partie (FT) fixe par l'intermédiaire de la voie radioélectrique duplex libre que le message (KMn) d'identification comportant une identification de groupe et une identification individuelle de cette partie (MTn) mobile.

4. Procédé suivant l'une des revendications 1 à 3, caractérisé en ce que, en cas d'appel partant, il est établi une communication par la partie (FT) fixe avec la partie (MTn) mobile appelante et il est émis sur cette voie radioélectrique de duplex un message (BM) d'occupation pour les parties (MTn) mobiles passives.
